# EUROPEAN PATENT SPECIFICATION

(11) **EP 2 213 897 B1**
(45) Date of publication and mention of the grant of the patent: **10.08.2011**
(21) Application number: 09001121.4
(22) Date of filing: 28.01.2009
(51) Int. Cl.: F16D 1/096

(54) **Device for fixing a rotor-element on a rotating shaft**
Vorrichtung zum Befestigen eines Rotorelements auf einer Drehwelle
Dispositif de fixation d'un élément de rotor sur un arbre rotatif

(43) Date of publication of application: 04.08.2010
(73) Proprietor: SICK Sensors Ltd., 20179 D.N Misgav (IL)
(72) Inventor: Driker, Michael, Maalot (IL)
(74) Representative: Patentanwälte Westphal, Mussgnug & Partner

(56) References cited:
- EP-A- 0 586 935
- DE-A1- 19 904 471
- FR-A- 2 587 772

## Description

The invention relates to a device for fixing a rotor-element, especially the rotor of an encoder on a rotating shaft according to the preamble of claim 1.

In many technical fields a rotor-element is to be fixed in a torque-proof and concentric manner on a rotating shaft. For example, if encoders are used to measure the angular position or angle-dependent data of a rotating shaft, e.g. a motor shaft of a servo drive, the encoder comprises a rotor, which is fixed to the rotating shaft. The rotor has an absolute or incremental measure, which is scanned by a scanning of the encoder so as to obtain the angle-dependent data.

The rotor must be fixed to the rotating shaft, the rotational angle of which is to be measured, in a torque-proof and concentric manner. For this purpose, it is known to embody the rotor with a clamping sleeve, which can be attached to the shaft in a coaxial manner and which is clamped on the shaft. In many applications, e.g. when the encoder is placed onto a motor shaft, a radial engagement to the clamping is difficult or quite impossible for lack of space so that it is advantageous when the clamping can be carried out by means of an axially engaging tool.

For such a clamping with axial engagement it is known to embody the clamping sleeve of the rotor with a cone, on which an opposite cone is pushed or drawn axialy so as to press the clamping sleeve against the shaft radially and to fix the clamping sleeve on said shaft. It is known, e.g., from DE 102 15 997 A1 and from EP 1 517 120 B2 to effect the axial force for pushing the cone surfaces onto one another by means of a screw, which is arranged centrally to the shaft in an axial manner. The encoder can thereby be positioned only at the end of the shaft so that the flexibility in the axial arrangement of the encoder on the shaft is limited. It is known from DE 10 2006 045 792 A1 to push a clamping cone onto the conical clamping sleeve in that the clamping cone is screwed on via a thread and is driven by means of a bevel, which is offset in an axially parallel manner.

It is known from DE 199 04 471 A1, which shows a device according to the preamble of claim 1, to arrange eccentric cams in the wall of the clamping sleeve of the rotor. Said eccentric cams can be rotated about an axially parallel axis of rotation for the purpose of clamping the clamping sleeve on the shaft. The production of the clamping device is expensive. The clamping force acts only in the peripheral points of the eccentric cams so that an even clamping force is not achieved across the entire periphery of the shaft.

A further device according to the preamble of claim 1 is known from US 6 225 721 B1. In this device, a clamping sleeve of the rotor is attached to the shaft and a clamping ring is pushed onto the clamping sleeve in a coaxial manner. Due to its elasticity, the clamping ring effects a radial clamping force, which clamps the clamping sleeve on the shaft. The assembly is made difficult by pushing the clamping ring onto the conical clamping sleeve. A disassembly, which may possibly be required, is thereby more difficult because it is difficult to pull the clamping ring off the clamping sleeve.

The object of the invention is to create a device for fixing a rotor-element, especially the rotor of an encoder on a rotating shaft, which can be fixed by means of an axially engaging tool and which is designed with small radial dimensions and a small moment of inertia.

This object is solved according to the invention by means of a device comprising the features of claim 1.

Advantageous embodiments of the invention are specified in the subclaims.

In the device according to the invention, the rotor-element, e.g. the rotor of the encoder comprises a clamping sleeve, which can be pushed on the rotating shaft, which is to be measured, so that said clamping sleeve contacts the outer periphery of the shaft in a coaxial manner. So as to press the clamping sleeve against the periphery of the shaft in a radial manner and so as to clamp it on the shaft, provision is made for a clamping ring, which encloses the clamping sleeve in a coaxial manner and which is in conact with the outer periphery of said clamping sleeve. The clamping ring is supported in a collar, which encloses the clamping sleeve in a coaxial manner, such that said clamping ring can move in a radial manner and can be pushed against the periphery of the clamping sleeve. Provision is made in the collar for axially thread holes, into which fixing screws are screwed. The axes of the fixing screws thus run axially for example parallel to the axis of the clamping sleeve and of the shaft, respectively. The fixing screws can thus be operated by means of a screwdriver or by means of a wrench, which is applied axially parallel to the shaft. When screwing the fixing screws into the thread holes of the collar, the tips thereof push with its axial force against the clamping ring in the outer peripheral region thereof. The fixing screws thus push onto a curved peripheral surface region of the clamping ring in an axial manner, whereby the axial force of the fixing screws generates a radial force component, by means of which the clamping ring is pushed radially against the clamping sleeve and clamps said clamping sleeve and hereby the rotor-element on the shaft.

The device is designed in a simple manner and requires a very small radial installation space at the periphery of the shaft. The clamping ring converts the axial force of the fixing screws into a radial clamping force, which is evenly distributed across the circumference. Furthermore, the clamping ring substantially fits the clamping sleeve with a linear contact so that a mutual tilting of the axes of the clamping sleeve and of the shaft is avoided. The rotor-element can thus be fixed in a reliable manner and with a high concentricity.

In a further embodiment, in case if the rotor and the clamping sleeve are two separate pieces the fixing of the device on the shaft can be combined with fixing the rotor and the clamping sleeve together.

The invention will be described in more detail by means of embodiments, which is illustrated in the drawing.

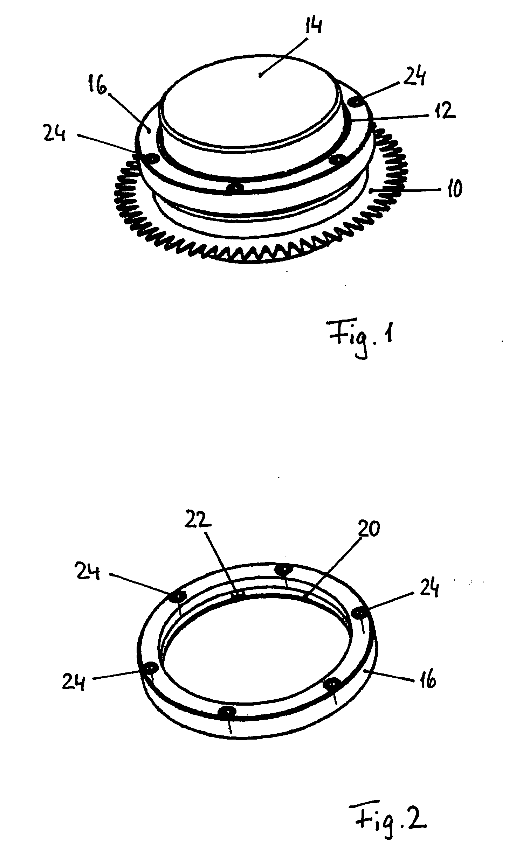

- Figure 1: shows a perspective view of the device for fixing the rotor of an encoder on a rotating shaft,
- Figure 2: shows the collar comprising the inserted clamping ring in a corresponding perspective view,
- Figure 3: shows an axial section through the device of Figure 1,
- Figure 4: shows an enlarged detail of Figure 3,
- Figure 5: shows a section corresponding to Figure 3, whereby the rotor and the clamping sleeve are separate pieces and
- Figur 6: shows an enlarged detail of Figure 4.

As an embodiment of the invention an encoder is used to measure the rotational position or values, which are dependent on the rotation, such as angular speed, angular acceleration, etc. of a rotating shaft, e.g. of the shaft of a motor. The drawing shows only the parts, which are substantial for the invention. The encoder can be designed in a manner as known per se, wherein the encoder comprises in particular a rotor, which is fixed to the shaft in a torque proof manner. The angular position of the rotor is scanned in the encoder and is converted into corresponding output signals.

As is illustrated in the drawing, the rotor 10 comprises a cylindrical clamping sleeve 12, which is pushed onto the rotating shaft 14, rotation of which is to be measured, in a coaxial manner. A collar 16, which encloses the clamping sleeve 12 coaxially, rests on the clamping sleeve 12. The collar 16 has the shape of a short cylindrical ring with a substantially rectangular cross section. The collar 16 fits on the clamping sleeve 12 with a minimal radial play. A circular slot 18 is provided in the cylindrical inner peripheral surface of the collar 16. Said slot 18 is open towards the inner peripheral surface of the collar 16. A clamping ring 20 is placed into this slot 18. The clamping ring 20 is made of an elastically resilient material, in particular of an elastically resilient metal. The clamping ring 20 has a preferably circular material cross section. The cross section of the clamping ring 20 substantially corresponds to the axial width of the slot 18 so that the clamping ring 20 can move in the slot 18 in radial direction, but it is guided and supported in axial direction. The clamping ring 20 is ripped up and interrupted by means of a slit 22. The diameter of the clamping ring 20 can thus widen in a resilient manner and can decrease until the slit 22 is closed in peripheral direction. In the relaxed state, the clamping ring 20 is located in the slot 18 to the extent that its inner peripheral surface projects slightly above the inner peripheral surface of the collar 16. The diameter of the clamping ring 20 can be expanded in a resilient manner to the extent that it completely dips into the slot 18 of the collar 16.

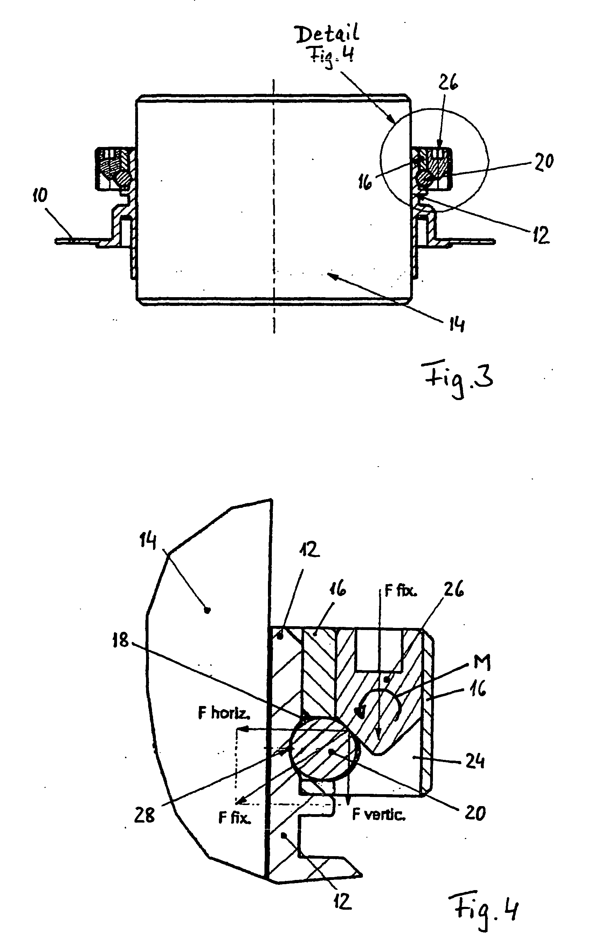

Provision is made in the axial end faces of the collar 16, which are placed in opposite direction to the rotor 10, for thread holes 24, which feed in an axially manner through the collar 16, for example parallel to the axis of the shaft 14 and of the clamping sleeve 12. Preferably, provision is made for a plurality of thread holes 24, which are arranged in particular at the same angular distance. In the illustrated exemplary embodiment provision is made for six thread holes 24. The thread holes 24 are arranged in the collar 16 in such a radial position that they overlap with the slot 18 with a portion of their bore cross section. The clamping ring 20 thereby reaches into the cross section of the thread holes 24 with its outer peripheral surface region, as can be seen most clearly in Figure 4.

Fixing screws 26, which can preferably be embodied as headless screws, are screwed into the thread holes 24. The fixing screws 26 have a conical tip. As is shown in Figure 4, the fixing screws 26 engage the outer peripheral region of the clamping ring 20 with the cone surface of their tip when they are screwed in. The axial force F_{fix} generated by the fixing screw 26 in response to the screwing generates an axial force component F_{vertic} and a radial force component F_{horiz} in the clamping ring 20. The radial force component F_{horiz} presses the clamping ring 20 against the clamping sleeve 12 radially, whereby said clamping sleeve 12 is pressed against the shaft 14 and is clamped and fixed on the shaft 14. The axial force component F_{vertic} is supported axially by the wall of the slot 18.

A flat groove 28 revolving in peripheral direction is embodied in the outer peripheral surface of the clamping sleeve 12. Said groove 28 serves the purpose of positioning the collar 16 on the clamping sleeve 12 during the assembly.

During the assembly, the collar 16 is pushed onto the clamping sleeve 12 with the inserted clamping ring 20. The clamping ring 20 is thereby widened initially and is completely pressed into the slot 18, wherein the circular cross section of the clamping ring 20 becomes effective as a sloping lead-in surface. If the collar 16 is pushed onto the clamping sleeve 12 in an axial manner to the extent that the clamping ring 20 has reached the groove 28 of the clamping sleeve 12, the clamping ring 20 can contract in a resilient manner so that the collar 16 is snapped onto the clamping sleeve 12 by means of the clamping ring 20. The encoder with its rotor 10 and the clamping sleeve 12 is then pushed onto the shaft 14 and is positioned axially. The fixing screws 26 are now screwed in so as to press the clamping ring 20 and the clamping sleeve 12 via said clamping ring 20 against the periphery of the shaft 14 radially, whereby the rotor 10 is fixed on the shaft 14. A disassembly can be carried out in a simple manner by unscrewing the fixing screws 26.

The thread of the thread holes 24 and of the fixing screws 26 may be a self-locking thread so that the screws 26 and the clamping of the rotor 10 on the shaft 14 cannot release itself in an unwanted manner. However, the reactive force to the radial force F_{horiz} generates a momentum M tilting the axis of the screw 26 against the axis of the thread hole 24. Therefore the screw 26 is locked only by this momentum M as well and an unwanted release of the screws 26 and the clamping of the rotor 10 is prevented.

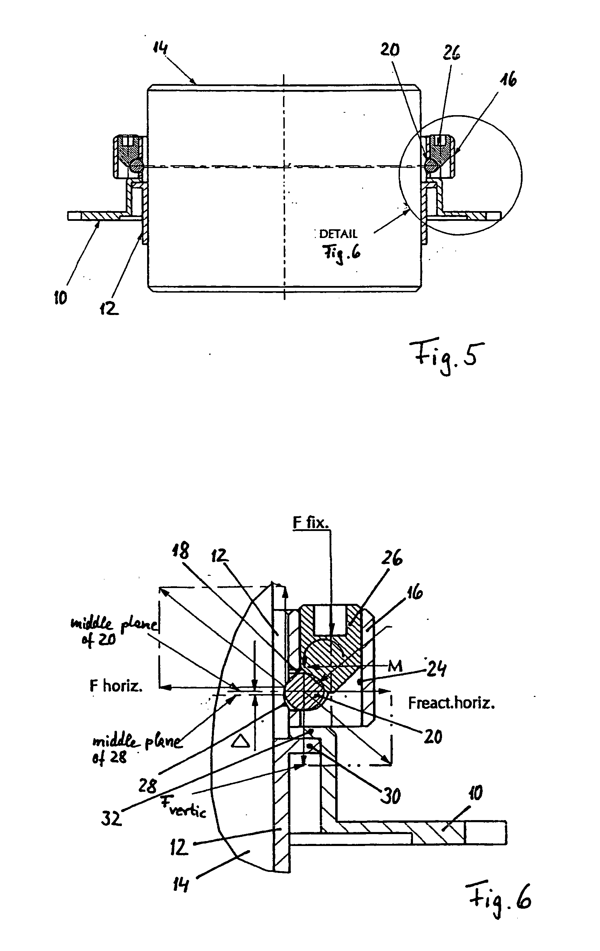

In the embodiment of Figures 3 and 4 the rotor 10 and the clamping sleeve 12 are one piece or fixed together. Figures 5 and 6 show another embodiment where the rotor 10 and the clamping sleeve 12 are two separate pieces.

In the embodiment of Figures 5 and 6 the clamping sleeve 12 comprises an outer flange 30 and the rotor 10 rests with an inner flange 32 axially on this outer flange 30. As shown in Figur 6 in the unclamped position the middle plane of the clamping ring 20 and the middle plane of the groove 28 of the clamping sleeve 12 are axially displaced by a small distance Δ. If the screws 26 are screwed in and the clamping ring 20 is pressed radially into the groove 28 the clamping ring 20 therefore presses the collar 16 and the outer flange 30 of the sleeve 12 axially together (in the direction of F_{vertic}) so that the inner flange 32 of the rotor 10 is axially clamped between the collar 16 and the outer flange 30 of the clamping sleeve 12. Thereby the rotor 10 is fixed on the clamping sleeve 12 and the clamping sleeve 12 and the rotor 10 are fixed together on the shaft 14.

### List of Reference Numerals

- 10: rotor
- 12: clamping sleeve
- 14: shaft
- 16: collar
- 18: slot
- 20: clamping ring
- 22: slit
- 24: thread holes
- 26: fixing screws
- 28: groove
- 30: outer flange of 12
- 32: inner flange of 10

## Claims

1. A device for fixing a rotor-element, especially the rotor of an encoder on a rotating shaft comprising a clamping sleeve (12) of the rotor (10), which can be pushed onto the shaft (14) coaxially and which rests against the outer periphery of the shaft (14), and a clamping ring (20), which encloses the clamping sleeve (12) coaxially and which exerts a radial clamping force on the clamping sleeve (12) for the purpose of clamping the clamping sleeve (12) on the shaft (14),
**characterized in that** a collar (16) encloses the clamping sleeve (12) coaxially, that the clamping ring (20) is inserted in the collar (16) so as to be freely movable radially against the clamping sleeve (12) and so as to be supported axially and that fixing screws (26) can be screwed into axial thread holes (24) of the collar (16), which engage with their tip the clamping ring (20) in an eccentric manner at the outer peripheral surface region thereof, whereby the axial force (F_{fix}) of the fixing screws (26) presses the clamping ring (20) against the clamping sleeve (12) with a radial force component (F_{horiz}).

2. The device according to claim 1,
**characterized in that** the clamping ring (20) is made of an elastically resilient material, especially metal and is ripped by means of a slit (22) in peripheral direction.

3. The device according to claim 2,
**characterized in that** the clamping ring (20) has a circular material cross section.

4. The device according to one of the preceding claims,
**characterized in that** at least three fixing screws (26) are provided in the same mutual angular distance.

5. The device according to one of the preceding claims,
**characterized in that** the thread holes (24) and the fixing screws (26) are embodied with a self-locking thread.

6. The device according to one of the preceding claims,
**characterized in that** the reactive force of the radial force component (F_{horiz}) generates a tilting momentum (M) on the fixing screws (26) locking the fixing screws (26) in the thread holes (24).

7. The device according to one of the preceding claims, **characterized in that** the fixing screws (26) comprise a conical tip and engage with their cone surface on the clamping ring (20).

8. The device according to one of the preceding claims, **characterized in that** the clamping ring (20) is inserted in a slot (18), which is embodied in the inner peripheral surface of the collar (16).

9. The device according to one of the preceding claims, **characterized in that** the clamping sleeve (12), in its outer peripheral surface, comprises a groove (28), in which the clamping ring (20) snaps.

10. The device according to claim 8 or 9,
**characterized in that** the rotor (10) and the clamping sleeve (12) are two separate pieces and are fixed together by the axial force of the collar (16).

11. The device according to claims 8 to 10,
**characterized in that** the middle planes of the clamping ring (20) and the groove (28) are axially displaced in an unclamped condition and the clamping ring (20) presses the collar (16) axially, if the clamping ring (20) is pressed radially into the groove (28) whereby the rotor (10) is axially clamped between the collar (16) and a flange (30) of the clamping sleeve (12).

## Patentansprüche

1. Vorrichtung zum Fixieren eines Rotor-Elements, insbesondere des Rotors eines Encoders auf einer rotierenden Welle, mit einer Spannhülse (12) des Rotors (10), die koaxial auf die Welle (14) aufsteckbar ist und am Außenumfang der Welle (14) anliegt, und mit einem Klemmring (20), der die Spannhülse (12) koaxial umschließt und der eine radiale Klemmkraft auf die Spannhülse (12) ausübt, um die Spannhülse (12) auf der Welle (14) zu klemmen,
**dadurch gekennzeichnet, dass** eine Muffe (16) die Spannhülse (12) koaxial umschließt, dass der Klemmring (20) in der Muffe (16) radial frei gegen die Spannhülse (12) beweglich und axial abgestützt aufgenommen ist und dass Fixierschrauben (26) in achsparallele Gewindebohrungen (24) der Muffe (16) eindrehbar sind, die mit ihrer Spitze an dem Klemmring (20) exzentrisch an dessen äußerem Umfangsbereich angreifen, wodurch die axiale Kraft (F_{fix}) der Fixierschrauben (26) den Klemmring (20) mit einer radialen Kraftkomponente (F_{horiz}) gegen die Spannhülse (12) presst.

2. Vorrichtung nach Anspruch 1,
**dadurch gekennzeichnet, dass** der Klemmring (20) aus einem elastisch federnden Material, insbesondere Metall besteht und in Umfangsrichtung durch einen Schlitz (22) aufgetrennt ist.

3. Vorrichtung nach Anspruch 2,
**dadurch gekennzeichnet, dass** der Klemmring (20) einen kreisförmigen Materialquerschnitt aufweist.

4. Vorrichtung nach einem der vorhergehenden Ansprüche, **dadurch gekennzeichnet, dass** wenigstens drei Fixierschrauben (26) in gleichem gegenseitigen Winkelabstand vorgesehen sind.

5. Vorrichtung nach einem der vorhergehenden Ansprüche, **dadurch gekennzeichnet, dass** die Gewindebohrungen (24) und die Fixierschrauben (26) mit einem selbsthemmenden Gewinde ausgebildet sind.

6. Vorrichtung nach einem der vorhergehenden Ansprüche, **dadurch gekennzeichnet, dass** die Gegenkraft der radialen Kraftkomponente (F_{horiz}) ein Kippmoment (M) auf die Fixierschrauben (26) erzeugt, welches die Fixierschrauben (26) in den Gewindebohrungen (24) blockiert.

7. Vorrichtung nach einem der vorhergehenden Ansprüche, **dadurch gekennzeichnet, dass** die Fixierschrauben (26) eine konische Spitze aufweisen und mit ihrer Konusfläche an dem Klemmring (20) angreifen.

8. Vorrichtung nach einem der vorhergehenden Ansprüche, **dadurch gekennzeichnet, dass** der Klemmring (20) in einer Nut (18) aufgenommen ist, die in der inneren Umfangsfläche der Muffe (16) ausgebildet ist.

9. Vorrichtung nach einem der vorhergehenden Ansprüche, **dadurch gekennzeichnet, dass** die Spannhülse (12) in ihrer Außenumfangsfläche eine Rille (28) aufweist, in welche der Klemmring (20) einrastet.

10. Vorrichtung nach Anspruch 8 oder 9,
**dadurch gekennzeichnet, dass** der Rotor (10) und die Spannhülse (12) zwei getrennte Teile sind und durch die axiale Kraft der Muffe (16) aneinander festgelegt sind.

11. Vorrichtung nach den Ansprüchen 8 bis 10,
**dadurch gekennzeichnet, dass** die Mittelebenen des Klemmrings (20) und der Rille (28) im ungeklemmten Zustand axial gegeneinander versetzt sind und dass der Klemmring (20) die Muffe (16) axial drückt, wenn der Klemmring (20) radial in die Rille (28) drückt, wodurch der Rotor (10) zwischen der Muffe (16) und einem Flansch (30) der Spannhülse (12) axial geklemmt wird.

## Revendications

1. Dispositif pour fixer un élément de rotor, en particulier le rotor d'un codeur sur un arbre rotatif comprenant :
- un manchon de serrage (12) pour le rotor (10) qui peut être poussé coaxialement sur l'arbre (14) et qui s'appuie contre la périphérie extérieure de l'arbre (14), et
- une bague de serrage (20) qui entoure le manchon de serrage (12) coaxialement et exerce une force de serrage radiale sur le manchon de serrage (12) pour serrer le manchon de serrage (12) sur l'arbre (14),
dispositif **caractérisé en ce que**
- un collier (16) entoure coaxialement le manchon de serrage (12),
- la bague de serrage (20) est insérée dans le collier (16) de façon à être librement mobile radialement contre le manchon de serrage (12) et pour être ainsi portée axialement, et
- des vis de fixation (26) qui peuvent être vissées dans des taraudages axiaux (24) du collier (16) et dont la pointe coopère avec la bague de serrage (20) de façon excentrique au niveau de la région de la surface périphérique extérieure,
* la force axiale (F_{fix}) des vis de fixation (26) pressant la bague de serrage (20) contre le manchon de serrage (12) avec une composante de force radiale (F_{horiz}).

2. Dispositif selon la revendication 1,
**caractérisé en ce que**
la bague de serrage (20) est réalisée en une matière élastique et en particulier en métal et elle est glissée grâce à une fente (22) dans la direction périphérique.

3. Dispositif selon la revendication 2,
**caractérisé en ce que**
la bague de serrage (20) a une section de corps circulaire.

4. Dispositif selon l'une quelconque des revendications précédentes,
**caractérisé en ce qu'**
au moins trois vis de fixation (26) sont réparties de manière équiangulaire.

5. Dispositif selon l'une quelconque des revendications précédentes,
**caractérisé en ce que**
les taraudages (24) et les vis de fixation (26) sont réalisés avec un filetage autobloquant.

6. Dispositif selon l'une quelconque des revendications précédentes,
**caractérisé en ce que**
la force de réaction de la composante de force radiale (F_{horiz}) génère un couple de basculement (M) s'exerçant sur les vis de fixation (26) bloquant les vis de fixation (26) dans les taraudages (24).

7. Dispositif selon l'une quelconque des revendications précédentes,
**caractérisé en ce que**
les vis de fixation (26) comportent une pointe conique coopérant par leur surface conique avec la bague de serrage (20).

8. Dispositif selon l'une quelconque des revendications précédentes,
**caractérisé en ce que**
la bague de serrage (20) est insérée dans une fente (18) réalisée dans la surface périphérique intérieure du collier (16).

9. Dispositif selon l'une quelconque des revendications précédentes,
**caractérisé en ce que**
la surface périphérique extérieure du manchon de serrage (12) comporte une gorge (28) dans laquelle s'enclipse la bague de serrage (20).

10. Dispositif selon l'une quelconque des revendications 8 ou 9,
**caractérisé en ce que**
le rotor (10) et le manchon de serrage (12) sont deux pièces séparées, fixées l'une à l'autre par la force axiale du collier (16).

11. Dispositif selon l'une quelconque des revendications 8 à 10,
**caractérisé en ce que**
les plans médians de la bague de serrage (20) et de la gorge (28) sont décalés axialement à l'état non serré et la bague de serrage (20) presse axialement le collier (16) lorsque la bague de serrage (20) est pressée axialement dans la gorge (28) de façon que le rotor (10) soit serré axialement entre le collier (16) et une bride (30) du manchon de serrage (12).
